Europäisches Patentamt

European Patent Office

Office européen des brevets

(19)

(11) Publication number: **0 114 927**
A2

(12) # EUROPEAN PATENT APPLICATION

(21) Application number: **83108497.5**

(51) Int. Cl.³: **C 09 K 3/18**

(22) Date of filing: **29.08.83**

(30) Priority: **04.01.83 US 455607**

(43) Date of publication of application:
**08.08.84 Bulletin 84/32**

(84) Designated Contracting States:
**CH DE FR GB IT LI NL**

(71) Applicant: **Rippie, Wallace**
**2030 Country Club Boulevard**
**Ames Iowa 50010(US)**

(72) Inventor: **Rippie, Wallace**
**2030 Country Club Boulevard**
**Ames Iowa 50010(US)**

(74) Representative: **Baillie, Iain Cameron et al,**
**c/o Ladas & Parry Isartorplatz 5**
**D-8000 München 2(DE)**

(54) De-icing composition and process for preparation.

(57) This invention relates to a de-icing composition and process for preparation and in particular, using calcium or magnesium carboxylate coated aggregates as snow and ice control compositions. A process for preparing these compositions includes mixing lime and wetting agent coated sand and treating the resulting product with a carboxylic acid.

EP 0 114 927 A2

Croydon Printing Company Ltd.

- 1 -

This invention relates to a de-icing composition and process for preparation. More particularly, the invention relates to compositions which are non-corrosive and do not cause degradation of roads and bridge decks or damage to roadside plants, when employed for controlling the buildup of snow and ice during winter weather.

For many years, salts, such as sodium chloride and calcium chloride, have been used for preventing the buildup of ice and snow on roads and for controlling or eliminating slippery road conditions. Other materials which have similarly been used include magnesium chloride and alkaline metal salts of iron cyanide, as disclosed in U. S. Patent No. 3,505,234. In addition, various surfactant-type materials have been used as antifreezing additives. See, e.g., U. S. 3,378,493. It has also been disclosed in U. S. Patent No. 4,247,331 to coat sand with calcium chloride and to use the resulting material for "treating ice covered roads during winter to produce improved traction". However, nearly all of the prior art systems are deficient in that most water soluble salt materials are extremely corrosive to metals which come in contact with them. For this reason, as the use of sale on highways has increased, automobile and truck body corrosion problems have also increased. In addition, bridge decking corrosion has increased markedly where salts are used as snow and ice control materials.

Thus, it is a feature of this invention to prepare compositions which may be used for aiding in the melting of snow and ice. Such compositions which may readily be spread from a tractor spreader.

Further, the improved compositions do not have a significant corrosive effect on metals, plants or other materials to which they are exposed during use. In particular, the compositions do not significantly increase the surface deterioration of highways or bridges and also do not unduly contribute to automobile or truck body corrosion problems.

Various calcium or magnesium carboxylate-containing materials may be used as highway snow and ice removal compositions when coated onto an aggregate such as sand. A process for preparing these compositions includes coating the aggregate with a wetting agent, such as an amine acetate, mixing the coated aggregate with a calcium or magnesium hydroxide-containing material, and fully or partially neutralizing the resulting product with a $C_1$-$C_4$ carboxylic acid.

The active ingredient in the noncorrosive ice and snow control compositions of the instant invention is either a magnesium carboxylate, a calcium carboxylate, or a calcium/magnesium carboxylate mixture, wherein the carboxylate group contains from 1 to 4 carbon atoms. Among the materials contemplated in the instant invention are the magnesium, calcium, or calcium/magnesium esters of formic, acetic, propionic and butyric acids, including mixtures thereof. The preferred compositions are the calcium/magnesium mixtures containing about 20 to about 80% by weight, based on the total mixture, of calcium carboxylate, with the remainder of the mixture being magnesium carboxylate. The preferred compounds are the calcium/magensium acetates.

The calcium or magnesium carboxylate which is chosen is employed with an aggregate of convenient choice. Examples of the aggregates which may be used include sand, nutshells (such as walnut shells and pecan shells pulverized corn cobs, etc.), expanded shale, fertilizer, urea and the like. The main requirement of the aggregate is that is possesses sufficient density so that when it is coated with the noncorrosive composition of the invention and applied to the desired substrate, it will not easily be blown off the surface by ambient wind conditions.

The particular aggregate which is chosen depends upon the desired end use. In most highway applications sand is the aggregate of choice. The sand may be of any convenient type, although building sand is preferred. Regardless of the sand type which is chosen, however, it is preferred that the sand be washed to remove any residual clay content, since clays contribute to slippery road conditions well after snow and ice have melted. On airport runways, on the other hand, where there is a danger of ingesting the noncorrosive salt composition of this invention into jet engines, a combustible aggregate, such as ground nutshells, is preferred.

According to the instant invention, a calcium/-magnesium carboxylate, magnesium carboxylate, or calcium carboxylate coating is applied to sand or other aggregates first by mixing in a conventional blender or mixer of any convenient type, approximately one part of the calcium, magnesium, or calcium/magnesium hydroxide with from about 0.75 to about 12 parts, by weight of aggregate. The preferred ratio is from about 1.5 to about 4.0 parts of aggregate for each part of hydroxide-containing material. Examples of the hydroxide-containing materials include agricultural or dolomite lime, as well as hydrated mason's lime. Other hydroxide materials may be simply the hydroxides of magnesium or calcium or mixtures thereof.

In order to facilitate coating of the aggregate with the hydroxide, it is preferred to use a wetting agent in amounts varying up to about 0.1%, by weight, based on the aggregate weight. The wetting agent usually is applied to the aggregate by mixing prior to the addition of the hydroxide-containing material. Numerous types of wetting agents may be used in this invention. Included predominantly are the so-called cement grinding aids, such as the amine acetates, the glycols, the alcohol and glycol amines, fatty acids, and formulated naphthalene and naphthenic acids. Specific examples of such materials include diethylene glycol, triethylene glycol, triethanolamine, hydroxyethyl ethylene diamine tetraacetic acid chelating agents and the like.

The second step in preparing the coating aggregate involves adding to the hydroxide/aggregate mixture a carboxylic acid, as described above. As pointed out above, nearly any low carbon-containing monocarboxylic acid may be used herein. However, acetic acid is preferred. The amount of the carboxylic acid which is added should be an amount sufficient to adjust the pH of the mixture to between about 7 and about 8.8. Lower pH solutions are corrosive to iron and steel materials.

It is preferred in carrying out the process of the instant invention to add the carboxylic acid over about 10 minutes to about one hour because of the exothermic nature of the reaction between the calcium/magnesium hydroxide and the carboxylic acid.

Following completion of the reaction, the mixture thus prepared is agitated in a mixer, such as a cement mixer, until a smooth, free flowing solid results. The period of time required for this step may range from 2 to 10 hours.

The resulting products may be employed in a variety of applications where it is necessary to melt snow or ice or to insure that ice does not form. While the primary intended use of the compositions herein is on roads and bridges and wherever non-corrosive ice and snow control products are required, it is also possible to employ these products on airport runways, roofs, sidewalks, and exterior coal, sand or mineral piles. When applied to roads and bridges, the compositions of this invention may simply be spread in the same fashion that road sand and conventional salt is spread, usually from a moving truck or sander. However, these compositions may also be spread by hand or by using other methods, particularly where small scale applications are involved.

In the following examples, all parts and percentages are by weight unless otherwise indicated.

### Example 1

A 2.0 percent by weight aqueous solution of CGA#4, an amine acetate cement grinding aid, available from W. R. Grace Company, having a specific gravity of 1.16, a weight per gallon of 9.66 pounds (1.16 g/cu.cm) and a pour point of -49°F. (-45°C.) was added at the 0.02% by active ingredient weight level to warm, dry sand, and stirred for 20 minutes. To 500g. of this mixture were added 250g. of hydrated Mason's lime. Following agitation of the mixture, 420 ml. of 99% glacial acetic acid were then added to the sand/lime mixture over 20 mintures to neutralize the lime. During addition, the temperature of the mixture rose to 140°F. (60°C.). Agitation of the mixture was continued for about 5 hours. A product resulted which exhibited excellent snow and ice removal properties on roadway surfaces. At the same time, the product did not unduly corrode iron or steel panels.

## Example 2

Example 1 was repeated, except that the dolomite lime was replaced by a 60/40 mixture of hydrated lime (CA(OH)$_2$) and magnesium hydroxide. Results similar to those of Example 1 were obtained.

CLAIMS

1. A composition useful in control of snow and ice, comprising a composition which includes magnesium carboxylate, calcium carboxylate or mixtures thereof, wherein the carboxylate group contains from 1 to 4 carbon atoms.

2. The composition of claim 1, wherein the carboxylate is acetate.

3. The composition of claim 1 or 2, wherein a coating of said composition is formed on an aggregate.

4. A snow and ice control composition, comprising the reaction product of an hydroxide material selected from magnesium hydroxide, calcium hydroxide, and mixtures thereof with a $C_1$-$C_4$ carboxylic acid in the presence of an aggregate.

5. The composition of claim 3 or 4, wherein the aggregate is sand.

6. The composition of claim 3 or 4, prepared in combination with a wetting agent.

7. The composition of claim 6, wherein the wetting agent is an amine acetate.

8. The composition of claim 4, wherein the ratio of the hydroxide material to the aggregate is in the range of 1 to 0.75 to 1 to 12 by weight.

9. A process for preparing a composition useful in control of snow and ice, comprising the steps of: coating an aggregate with a wetting agent; mixing the wetted aggregate with a compound selected from calcium hydroxide, magnesium hydroxide and mixtures thereof; and reacting at least a portion of the hydroxide groups with a carboxylic acid having from one to four carbon atoms.

10. The process of claim 9, wherein the aggregate is sand.

11. The process of claim 9, wherein the wetting agent is an amine acetate.

12. The process of claim 9, wherein the composition is a mixture of calcium and magnesium hydroxide and the carboxylic acid is acetic acid.

13. The process of claim 9, wherein the mixture is agitated for up to 12 hours following the reaction step.